# EUROPÄISCHE PATENTSCHRIFT

(11) **EP 0 682 620 B1**
(45) Veröffentlichungstag und Bekanntmachung des Hinweises auf die Patenterteilung: **19.08.1998**
(21) Anmeldenummer: 95905015.4
(22) Anmeldetag: 14.12.1994
(51) Int. Cl.: B62M 3/02

(54) **VORRICHTUNG ZUR TRETKURBELARMLÄNGENVERSTELLUNG**
PEDAL CRANK ARM LENGTH ADJUSTMENT DEVICE
DISPOSITIF DE REGLAGE DE LA LONGUEUR DES BRAS DE LA MANIVELLE D'UN PEDALIER

(30) Priorität: 14.12.1993 DE 4343602; 09.02.1994 DE 4404796
(43) Veröffentlichungstag der Anmeldung: 22.11.1995
(73) Patentinhaber: Trimatic Radtechnik GmbH, 14542 Bliesendorf (DE)
(72) Erfinder: TODT, Steffen, D-12163 Berlin (DE)
(86) Internationale Anmeldenummer: DE9401521
(87) Internationale Veröffentlichungsnummer: WO9516602

(56) Entgegenhaltungen:
- EP-A- 0 031 627
- DE-U- 9 319 618
- DE-U- 9 402 483
- FR-A- 516 201
- GB-A- J9 396

## Beschreibung

Die Erfindung betrifft eine Vorrichtung sowohl zur symmetrischen als auch zur asymmetrischen Verstellung der wirksamen Länge der Tretkurbelarme von Tretkurbeln für Fahrräder und ist anwendbar insbesondere bei der Herstellung der Tretkurbel-Pedale-Antriebssysteme bzw. der Nachrüstung derartiger bereits vorhandener Antriebe. Bevorzugtes Einsatzgebiet sind Rennfahrräder und andere Wettkampfräder.

Das Prinzip der Längenverstellung von Tretkurbelarmen ist bekannt und dient entweder dem Ersatz einer Gangschaltung oder zusätzlich zu der Schaltung des Fahrradgetriebes als weiterer Einstellmöglichkeit der Antriebskraftübertragung.

So beschreibt die EP 0031627 B1 eine Tretkurbel für Fahrräder mit einer in Form einer Kurbelwelle ausgebildeten Pedalachse, deren erster Kurbelzapfen in Lagerungen der Pedale und deren zweiter Kurbelzapfen in einer Lagerung im Tretkurbelarm drehbar ist und der erste Kurbelzapfen mit einer Freilaufnabe zusammenwirkt, die beim Vorwärtstreten Freilaufstelllung einnimmt und beim Rückwärtstreten den ersten Kurbelzapfen drehfest mit der Pedale verbindet. Auf den im Tretkurbelarm drehbar gelagerten Kurbelzapfen wirkt ein Drehwiderstand ein, wodurch der Kurbelzapfen in acht verschiedene, vorgegebene Winkellagen gegenüber dem Tretkurbelarm einstellbar ist.

Nachteilig an dieser Lösung ist, daß zu ihrer Realisierung weder eine herkömmliche Tretkurbel noch herkömmliche Pedalen eingesetzt werden können. Vielmehr sind Spezialanfertigungen erforderlich, welche bezüglich des Tretkurbelarmes den Einbau einer Gleitlagerung und eines Kurbelzapfens sowie innerhalb des Tretkurbelarmes eines Drehwiderstandes erfordern.
Diese Maßnahmen sind sehr arbeitsaufwendig, wirken sich negativ auf Standardisierungsprozesse aus und gestatten nicht die Nachrüstung herkömmlicher Tretkurbeln. Außerdem ist es mit dieser Lösung nicht möglich, die Länge der einzelnen Kurbeln individuell, also asymmetrisch einzustellen. Ebenfalls nicht möglich ist es, den vorgegebenen Einstellbereich, also die Längenänderung pro Schaltschritt, individuell zu modifizieren.

Der Erfindung liegt daher die Aufgabe zugrunde, eine Vorrichtung zur Tretkurbelarmlängenverstellung sowohl während der Fahrt als auch im Ruhezustand zu schaffen, welche einfach und preiswert herstellbar ist, keine konstruktiven Veränderungen an herkömmlichen, standardisierten Tretkurbeln und Pedalen erfordert und sowohl beim Neubau als auch bei der Nachrüstung von Fahrradantriebssystemen einsetzbar ist. Weiterhin ist es Aufgabe der Erfindung, die Länge der beiden Tretkurbelarme im Ruhezustand unabhängig voneinander einstellen zu können sowie den Verstellbereich, also die Längenänderung pro Schaltschritt, zu modifizieren und die Strecke des Rückwärtstretens bis zur Aktivierung des Verstellmechanismus einstellen zu können.

Diese Aufgabe wird erfindungsgemäß gelöst durch die Merkmale im kennzeichnenden Teil des Anspruchs 1 im Zusammenwirken mit den Merkmalen des Oberbegriffs. Zweckmäßige Ausgestaltungen der Erfindung sind in den Unteransprüchen enthalten.

Der besondere Vorteil der Erfindung besteht darin, daß durch den Einsatz eines separaten Stellgliedes zwischen Tretkurbelarm und Pedale anstelle der herkömmlichen Pedalachse keinerlei Veränderungen an Tretkurbelarm oder Pedale vorgenommen werden müssen und somit die handelsüblichen, standardisiert hergestellten Tretkurbeln und Pedalen eingesetzt werden können.
Der Hersteller ist damit in der Lage, seine Kurbellängen beispielsweise derart zu standardisieren, daß bei der Herstellung einer Kurbellänge von 172,5 mm mit der Erfindung die Kurbellängen 170 mm und 175 mm eingespart werden können. Neben dem Rennradbereich ist auch der Mountainbike-Bereich von Interesse. Im Mountainbike-Bereich erhält man beispielsweise mit einer Kurbellänge von 177,5 mm durch Einsatz der Erfindung die Kurbellängen 175 mm und 180 mm.

Durch die erfindungsgemäße Gestaltung des Stellgliedes, welches aus einem Exzenterelement mit Pedalachsteil und einem mit dem Exzenterelement koresspondierendem Gegenstück mit Einschraubgewindeteil besteht, wobei das Gegenstück und das Exzenterelement jeweils Mitnahmeelemente oder Mitnahmevertiefungen aufweisen und im montierten Zustand die Mitnahmeelemente mit zugeordneten Mitnahmevertiefungen in Eingriff stehen und die wirksame Länge des Tretkurbelarmes definieren, ist eine einfache und kostengünstige Herstellung sowie problemlose Montage möglich.
Durch die Erfindung wird es ebenso ermöglicht, sowohl Neuanfertigungen als auch Nachrüstungen des Tretkurbelantriebes zu realisieren.

Ein weiterer Vorteil der Erfindung besteht darin, daß es sowohl möglich ist, die Mitnahmeelemente an der Stirninnenseite des Gegenstückes und die Mitnahmevertiefungen an der Stirnseite des Exzenterelementes anzuordnen als auch eine umgekehrte Positionierung vorzunehmen, das heißt, die Mitnahmeelemente an der Stirnseite des Exzenterelementes und die Mitnahmevertiefungen an der Stirninnenseite des Gegenstückes anzuordnen. Ebenso ist es möglich, die Mitnahmeelemente an der Außenseite des Gegenstückes und die Mitnahmevertiefungen an der Innenseite des Exzenterelementes oder die Mitnahmevertiefungen an der Außenseite des Gegenstückes und die Mitnahmeelemente an der Innenseite des Exzenterelementes anzuordnen.

Die symmetrische Einstellung der wirksamen Länge der Tretkurbelarme kann durch Rückwärtsdrehung der Tretkurbelarme im Zusammenwirken mit einer auf dem Pedalachsteil angeordneten Freilaufeinrichtung erfolgen.
Der Einsatz von Kugeln, welche mit in Bohrungen angeordneten Federn beaufschlagt sind, als Mitnahmeelemente und halbkugelförmigen Ausnehmungen oder Bohrungen als Mitnahmevertiefungen bewirkt eine leichtgängige Verstellung der Tretkurbelarmlänge, indem sich die Kugeln entlang der Lauffläche bis zu den nächsten Mitnahmevertiefungen bewegen.

Zweckmäßig ist die Anordnung von zwei Mitnahmeelementen und vier symmetrisch angeordneten Mitnahmevertiefungen, wodurch drei verschiedene Tretkurbelarmlängen in den Positionen "Mittel", "Kurz" und "Lang" realisiert werden.
Die Einstellung der Mittelposition erfolgt dabei in zwei verschiedenen, sich gegenüberliegenden Schaltstellungen.

Neben der Einstellung der Schaltposition über das Zusammenwirken mit der Freilaufeinrichtung bei Rückwärtsdrehung der Tretkurbelarme sind selbstverständlich auch andere Lösungen, beispielsweise die Verstellung über einen Miniaturelektromotor oder Federsysteme, möglich.

Ein zusätzlicher Vorteil der Erfindung besteht darin, daß die Länge der Tretkurbelarme auch asymmetrisch und unabhängig voneinander eingestellt werden kann, indem in die Gewindebohrung des handelsüblichen Tretkurbelarms eine Hülse mit einem Langloch zur Aufnahme des Einschraubgewindeteils eingebracht wird. Die Positionierung des Einschraubgewindeteils im Langloch erfolgt mittels einer Imbushülse mit Innensechskant. Durch diese zusätzliche asymmetrische Einstellmöglichkeit wird es möglich, die bei vielen Menschen vorhandene unterschiedliche Länge der Beine exakt and den Fahrradantrieb anzupassen. Es wird ein runder und gelenkschonender Tritt durch den Ausgleich auch geringster Unterschiede ermöglicht.
Wird eine derartige Einstellung nicht gewünscht, kann die Hülse mit Langloch gegen eine Hülse mit normaler Gewindebohrung ausgetauscht werden.

Ein weiterer Vorteil der Erfindung besteht darin, daß auch der Verstellbereich, also die Längenänderung der Tretkurbel pro Schaltschritt eingestellt werden kann. Hierfür besteht das Pedalchsteil aus einer Hohlachse und darin angeordnetem Bolzen. An der Stirnfläche des Exzenterlementes ist ein Langloch zur Aufnahme der Hohlachse und des Bolzens angeordnet. Je nach Position der Hohlachse und des Bolzens im Langloch ist der mit Änderung der Schaltstellung bewirkte Verstellbereich größer oder kleiner.
Die dauerhafte Positionierung erfolgt dadurch, daß auf das über die Länge der Hohlachse hinausgehende Gewindeteil des Bolzens eine Mutter aufgeschraubt wird.

Ein letzter Vorteil der Erfindung besteht darin, die Strecke des Rückwärtstretens bis zur Aktivierung des Verstellmechanismus einstellen zu können. Erreicht wird dies dadurch, daß die Freilaufhülse auf einer Buchse gelagert wird. Diese Buchse erfüllt die Wirkung eines Gleitlagers auf dem Pedalachsteil. An dieser Buchse ist eine Feder befestigt, die um den Pedalachsteil gewickelt und dort ein zweites Mal befestigt ist.
Beim Vorwärtstreten dreht sich die Freilaufhülse, die in einer Passung in der Einschraubhülse sitzt, auf der Buchse. Beim Rückwärtstreten blockiert die Freilaufhülse die Buchse, die daran befestigte Feder spannt sich auf bis sie auf dem Pedalachsteil blockiert und den Schaltvorgang des Exzenterelementes auslöst
In Abhängigkeit der gewählten Länge der als Blattfeder ausgebildeten Feder ist es damit beispielsweise möglich, den Schaltvorgang bereits nach einer viertel Rückwärtsdrehung oder auch nach vollen zwei Rückwärtsdrehungen auszulösen.

Die Erfindung soll nachstehend anhand von in den Figuren dargestellten Ausführungsbeispielen näher erläutert werden.

Es zeigen:
- Fig. 1: eine Längsschnittdarstellung durch eine erste Ausführungsform eines Stellgliedes mit an den Stirnseiten angeordneten Mitnahmeelementen und Mitnahmevertiefungen bei auseinandergebautem Pedalachsgehäuse
- Fig. 2: eine Längsschnittdarstellung durch das Stellglied nach Fig. 1 mit zusammengebautem Pedalachsgehäuse und montierter Freilaufeinrichtung
- Fig. 3: eine Seitenansicht auf die Stirninnenseite des Gegenstückes gemäß Figur 1
- Fig. 4: eine Seitenansicht auf die Stirnseite des Exzenterelementes gemäß Fig. 1
- Fig. 5: die erste Buchse der Freilaufeinrichtung gemäß Fig. 2 mit Aussparung
- Fig. 6: die zweite Buchse der Freilaufeinrichtung gemäß Fig. 2 mit Nase
- Fig. 7: eine um 90° gedrehte Ansicht zu Fig. 5
- Fig. 8: eine um 90° gedrehte Ansicht zu Fig. 6
- Fig. 9: eine Schnittdarstellung durch eine zweite Ausführungsform eines Stellgliedes mit an der Außenseite des Gegenstückes angeordneten Mitnahmelementen.
- Fig. 10: das Gegenstück gemäß Fig. 9
- Fig. 11: eine um 90° gedrehte Ansicht zu Fig. 10
- Fig. 12: das Exzenterelement gemäß Fig. 9
- Fig. 12a: das Exzenterelement mit variablem Verstellbereich des Schaltschrittes
- Fig. 13: eine um 90° gedrehte Ansicht zu Fig. 12
- Fig. 13a: eine um 90° gedrehte Ansicht zu Fig. 12a
- Fig. 14: eine Hülse mit Langloch zur asymmetrischen Verstellung der Tretkurbellänge.
- Fig. 15: eine um 90° gedrehte Ansicht zu Fig. 14
- Fig. 16: eine Hülse mit Standardgewindebohrung
- Fig. 17: eine um 90° gedreht Ansicht zu Fig. 16.
- Fig. 18: eine Hohlachse
- Fig. 19: ein Bolzen zur Befestigung der Hohlachse
- Fig. 20: eine Ausführungsform einer Freilaufhülse.
- Fig. 21: eine um 90° gedrehte Ansicht zu Fig. 20
- Fig. 22: eine Schnittdarstellung des Stellgliedes mit einer weiteren Ausführungsform der Freilaufeinrichtung

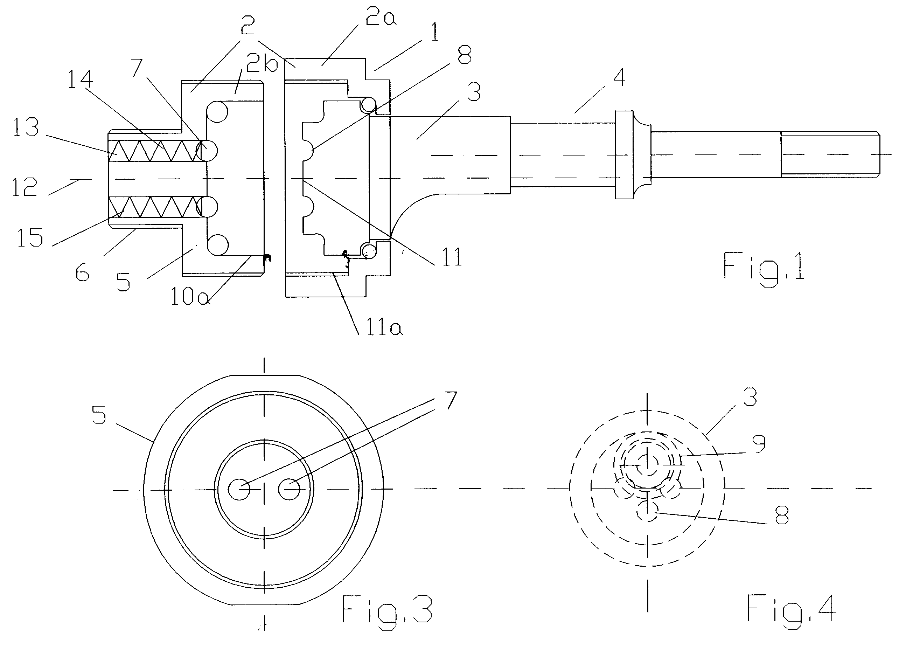

Wie für eine erste Ausführungsform aus Fig. 1 zu ersehen ist, besteht das separate Stellglied 1 aus einem in der Fig. 1 auseinandergeschraubten Pedalachsgehäuse 2, einem darin angeordneten Exzenterelement 3 mit Pedalachsteil 4 und einem mit dem Exzenterelement 3 koresspondierendem Gegenstück 5 mit Einschraubgewindeteil 6.
Das Einschraubgewindeteil 6 besitzt ein Außengewinde, mit welchem es in die Gewindebohrung des Tretkurbelarmes eingeschraubt wird. Gemäß dem Ausführungsbeispiel in Fig. 1 übergreift das Pedalachsgehäuseteil 2a das Pedalachsgehäuseteil 2b. In Fig. 2 ist eine Ausführungsvariante dargestellt, bei welcher das Pedalachsgehäuseteil 2c das Pedalachsgehäuseteil 2d übergreift.
Das Pedalachsteil 4 dient der Aufnahme und Lagerung einer herkömmlichen Pedale, beispielsweise einer Normal- oder Sicherheitspedale.

Das Gegenstück 5 ist gleichzeitig Teil des Pedalachsgehäuses 2 und wird über ein Außengewinde in ein Innengewinde des gegenüberliegenden Teils des Pedalachsgehäuses 2 eingeschraubt.

Das Gegenstück 5 weist an seiner Stirninnenseite 10 im vorliegenden Ausführungsbeispiel, wie auch aus Fig. 3 zu ersehen ist, zwei Mitnahmeelemente 7 auf, welche als Kugeln ausgebildet sind. Die Kugeln sind in Bohrungen 13 angeordnet und werden von Federn 14 beaufschlagt. Die auf die Kugeln 7 wirkende Federkraft ist über Eistellelemente 15 einstellbar.

Es ist bei diesem Ausführungsbeispiel selbstverständlich möglich, mehr als zwei Kugeln anzuordnen und die Kugeln von einer oder mehreren zentral angeordneten Federn zu beaufschlagen.

Das Exzenterelement 3 weist an seiner Stirnseite 4 Mitnahmevertiefungen 8 auf. Die symmetrische Anordnung der vier Mitnahmevertiefungen 8 ist aus Fig. 4 ersichtlich. Zwischen den Mitnahmevertiefungen 8, welche als halbkugelförmige Ausnehmungen ausgebildet sind, befindet sich die Lauffläche 9.

Im zusammengeschraubten Zustand des Pedalachsgehäuses 2, wie aus Fig. 2 ersichtlich, stehen die Mitnahmeelemente 7 mit zugeordneten Mitnahmevertiefungen 8 im Eingriff und definieren so die wirksame Länge des Tretkurbelarmes.
Die unterschiedliche wirksame Länge des Tretkurbelarmes in Abhängigkeit der Stellung der Mitnahmeelemente 7 in den Mitnahmevertiefungen 8 resultiert daraus, daß das Einschraubgewindeteil 6 bezüglich der Linie 12 zentrisch und das Pedalachsteil 4 bezüglich der Linie 12 exzentrisch angeordnet ist.

Neben der hier beschriebenen Anordnung ist es selbstverständlich auch möglich, die Mitnahmeelemente 7 am Exzenterelement 3 und die Mitnahmevertiefungen 8 im Gegenstück 5 anzuordnen.

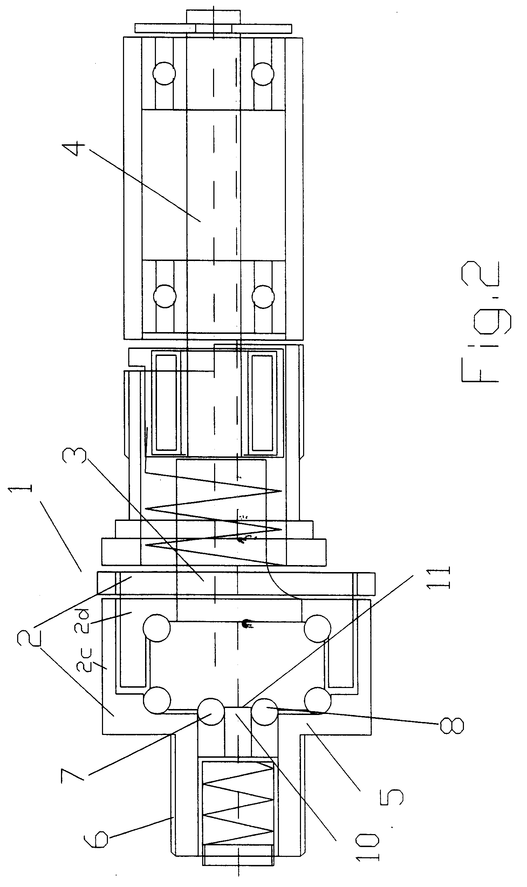

Die Pedale ist in den Figuren nicht dargestellt, sondern lediglich das Pedalachsteil 4, welches innerhalb der Pedale angeordnet wird.
Auf dem Pedalachsteil 4 wird zum Zusammenwirken mit der Pedale eine Freilaufeinrichtung angeordnet, welche montiert in Fig. 2 und in ihrem Aufbau in den Fig. 5 bis 8 dargestellt ist.

Die Freilaufeinrichtung besteht aus einer ersten Buchse 16, welche eine Aussparung 17 aufweist. In die erste Buchse 16 wird eine zweite Buchse 18 eingeschoben, welche eine Nase 19 aufweist. Die zweite Buchse 18 besitzt ferner eine Öffnung 22 zur Aufnahme einer Feder.

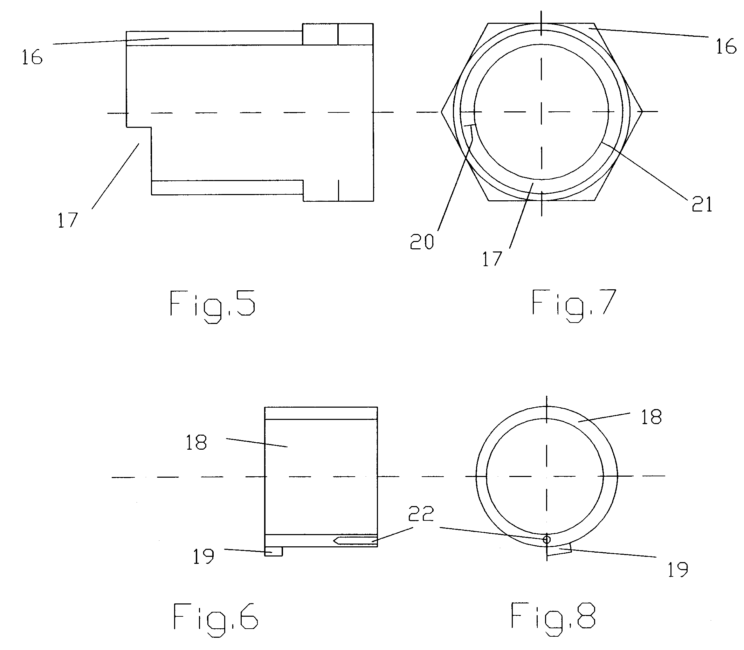

Wie aus Fig. 7 zu ersehen ist, bildet die Aussparung 17 eine Anschlagkante 20 für die Vorwärtsfahrt und eine Anschlagkante 21 für den Rückwärtstritt, wobei von der Anschlagkante 21 aus die Längenverstellung des Tretkurbelarmes aktiviert wird.

Die erste Ausführungsform der Erfindung soll nunmehr in ihrem dynamischen Zustand beschrieben werden. Hierzu ist das vollständig montierte separate Stellglied 1 mit dem Einschraubgewindeteil 6 in die Gewindebohrung eines handelsüblichen Tretkurbelarmes eingeschraubt und das Pedalachsteil 4 befindet sich mit der eingebauten Freilaufeinrichtung in einer handelsüblichen Pedale. Die Mitnahmeelemente 7 stehen mit Mitnahmevertiefungen 8 in Eingriff und definieren die Stellung "mittlere Drehkurbelarmlänge".

Beim Vorwärtstreten nimmt die Freilaufeinrichtung Freilaufstellung ein, das heißt, das Pedalachsteil 4 dreht sich in der Lagerung der Pedale und das Fahrrad wird mit der mittleren Tretkurbelarmlänge angetrieben.
Beim Rückwärtstreten, im vorliegenden Ausführungsbeispiel um 135°, gelangt die Nase 19 der zweiten Hülse 18 entlang der Aussparung 17 zu der Kante 21. Mit Erreichung dieser Kante 21 wird der Pedalachsteil 4 mit Exzenterelement 3 mit der Pedale drehfest verbunden und der Tretkurbelarmlängenverstellmechanismus aktiviert.

Je nach Ausgangsposition der zwei möglichen Stellungen "mittlere Tretkurbelarmlänge" gleiten die Mitnahmeelemente 7 nun entlang der Lauffläche 9 bis zum Einrasten in die nächste Schaltposition oder - falls gewünscht - darüber hinaus nochmals über die Mittelposition in die andere Extremstellung.

Werden für besondere Anwendungsfälle mehr als drei Schaltstellungen benötigt, ist dies problemlos über eine größere Anzahl von Mitnahmevertiefungen 8 möglich.

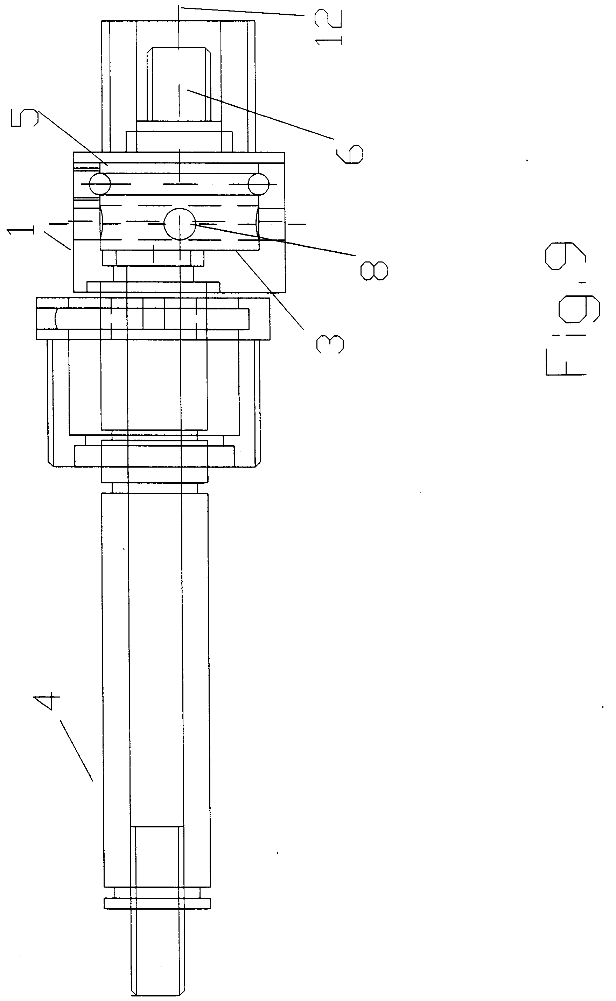

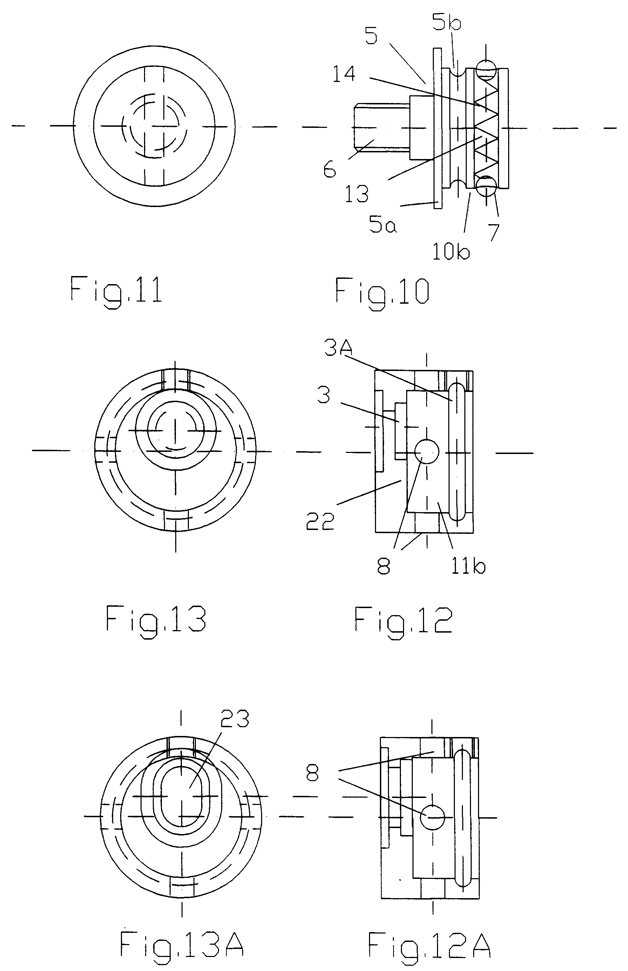

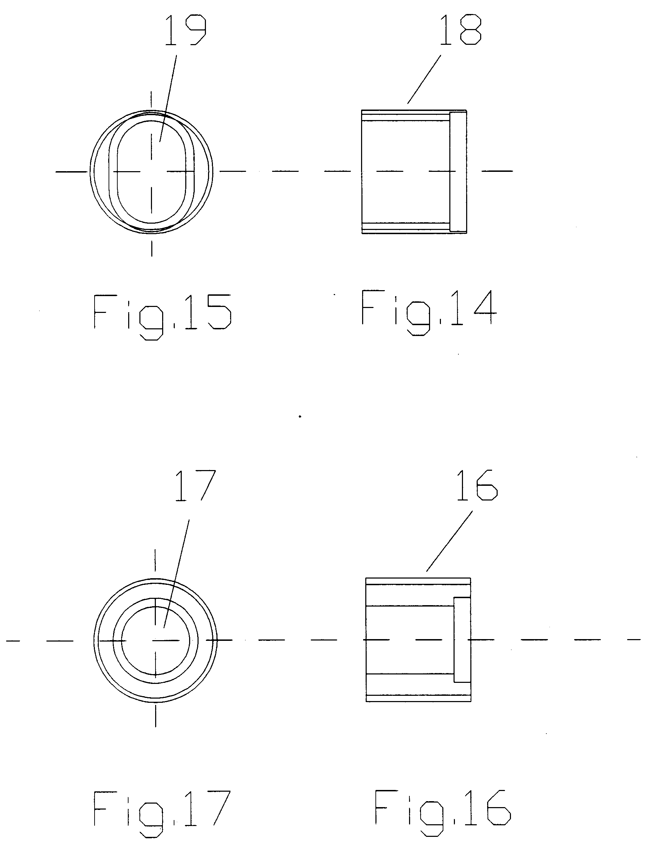

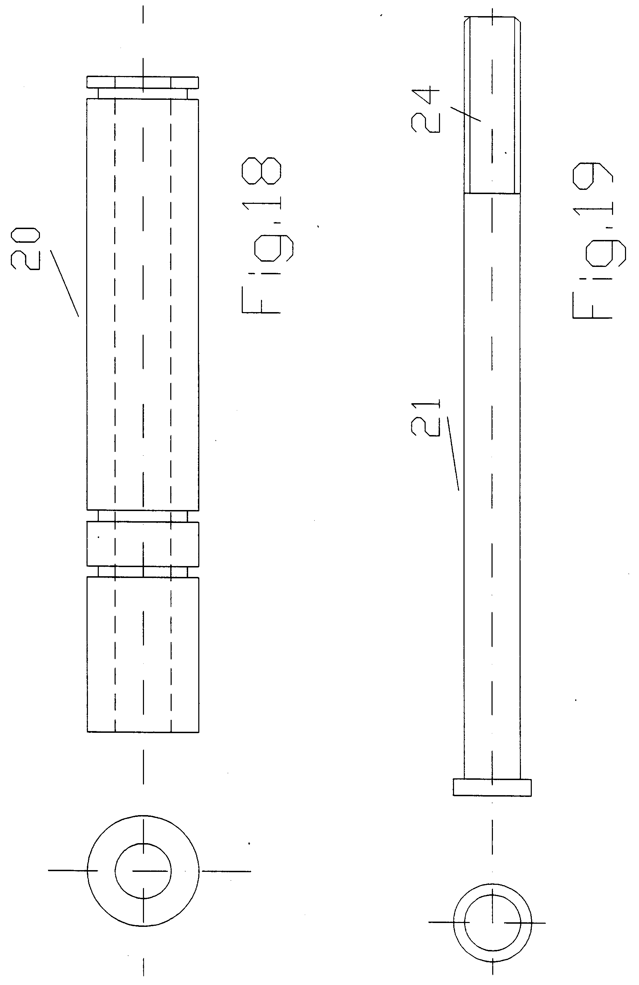

Die zweite Ausführungsform der Erfindung ist in den Fig. 9-20 dargestellt, wobei die Fig. 12a und 13a eine Möglichkeit zur variablen Einstellung der Schaltschritte und die Fig. 14 und 15 eine Möglichkeit zur asymmetrischen Längeneinstellung beschreiben und auch für die erste Auführungsform der Erfindung anwendbar sind.

Der wesentliche Unterschied der in den Fig. 9 bis 13a dargestellten zweiten Ausführungsform der Erfindung gegenüber der voranstehend beschriebenen Ausführungsform besteht darin, daß die Mitnahmelemente 7 und Mitnahmevertiefungen 8 nicht an den Stirnflächen von Exzenterelement 3 und Gegenstück 5 angeordnet sind, sondern an den Innen- bzw. Außenflächen diese Elemente.
Wie aus Fig. 10 zu ersehen ist, besitzt das Gegenstück 5 an seiner Außenseite 10b eine Bohrung 13 zur Aufnahme der als Kugeln ausgebildeten Mitnahmeelemente 7. Die Mitnahmeelemente 7 werden durch eine in der Bohrung 13 angeordnete Feder 14 beaufschlagt.
Das Gegenstück 5 besitzt weiterhin einen Anschlag 5a und eine Kugellauffläche 5b sowie ein Einschraubgewindeteil 6.

Das Exzenterelement 3 besitzt, wie aus den Fig. 9, 12 und 12a zu ersehen ist, eine Passung für das Gegenstück 3, in welcher eine Kugellauffläche 3a eingearbeitet ist. Die Kugellauffläche 3a korrespondiert im montierten Zustand mit der Kugellauffläche 5b.
Das Exzenterelement 3 weist im vorliegenden Ausführungsbeispiel vier um 90° versetzte Bohrungen 8 auf. Im montierten Zustand greifen in jeweils 2 gegenüberliegende Bohrungen 8 die Mitnahmeelemente 7 ein. Die Verstellung des Exzenterelementes 3 erfolgt im Zusammenwirken mit einer Freilaufvorrichtung analog wie im voranstehenden Ausführungsbeispiel beschrieben.

Je nach Ausführungsform der Vorrichtung ist es möglich, das Pedalchsteil 4 an dem Exzenterelement fest anzuformen und massiv auszubilden oder das Pedalachsteil 4 aus einer Hohlachse 20 und einem darin angeordneten Bolzen 21 zu bilden, wobei Hohlachse 20 und Bolzen 21 in einem Langloch 23 an der Stirnfläche 22 des Exzenterelementes 3 angeordnet sind.
Die Gestaltung der Bauteile für diese Ausführungsform ist in den Fig. 13a, 18 und 19 dargestellt.
Das Langloch 23 ist derart ausgebildet, daß es an der äußeren Stirnfläche des Exzenterelementes 3 passend zur Hohlachse 20 und an der inneren Stirnfläche passend zum Bolzen 21 gearbeitet ist. Zur Montage des Pedalachsteiles 4 wird die Hohlachse 20 von außen und der Bolzen 21 von innen in das Langloch 23 gesteckt. Da der Bolzen 21 an seinem hinteren Ende ein Gewinde besitzt und länger ist als die Hohlachse 20, kann hierdurch im Zusammewirken mit einer Mutter die Hohlachse 20 gekontert und somit am Exzenter 3 befestigt werden.
In dem Langloch 23 ist es nun möglich, durch Lösung der Konterung die Hohlachse 20 und den Bolzen 21 nach oben bzw. nach unten zu bewegen. Hierdurch werden unterschiedliche stufenlose Verstellbereiche der Kurbellänge erreicht.

Zur asymmetrischen Einstellung der Tretkurbellänge ist vorgesehen, daß in die Gewindebohrung zur Aufnahme der Pedalachse des handelsüblichen Tretkurbelarmes eine Hülse 18 mit einem Langloch 19 zur Aufnahme des Einschraubgewindeteils 6 eingeschraubt ist. Eine derartige Hülse ist in Fig. 14 und 15 dargestellt.
Das Einschraubgewindeteil 6 ist in dem Langloch 19 stufenlos nach oben bzw. unten verstellbar und wird in der gewünschten Position mittels einer in den Figuren nicht dargestellten Gewindehülse mit Innensechskant fixiert. Diese Ausführungsform ist insbesondere dann von Vorteil, wenn aus orthopädischen Gründen körperbaulich bedingte, unterschiedliche Beinlängen der Radfahrer ausgeglichen werden sollen.
Ist ein derartiger Ausgleich nicht erforderlich, so kann die Hülse 18 mit Langloch 19 durch die in den Fig. 16 und 17 dargestellte Hülse 16 mit zentrischer Gewindebohrung 17 ersetzt werden.

Nachfolgend soll die Funktion der Freilaufeinrichtung an Hand einer zweckmäßigen Ausführungsform für die in Fig. 9 dargestellte Ausführungsvariante des Stellgliedes 1 beschrieben werden.

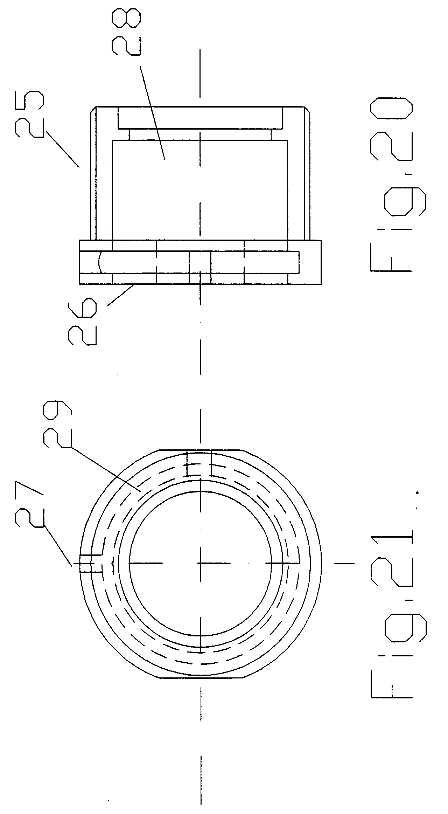

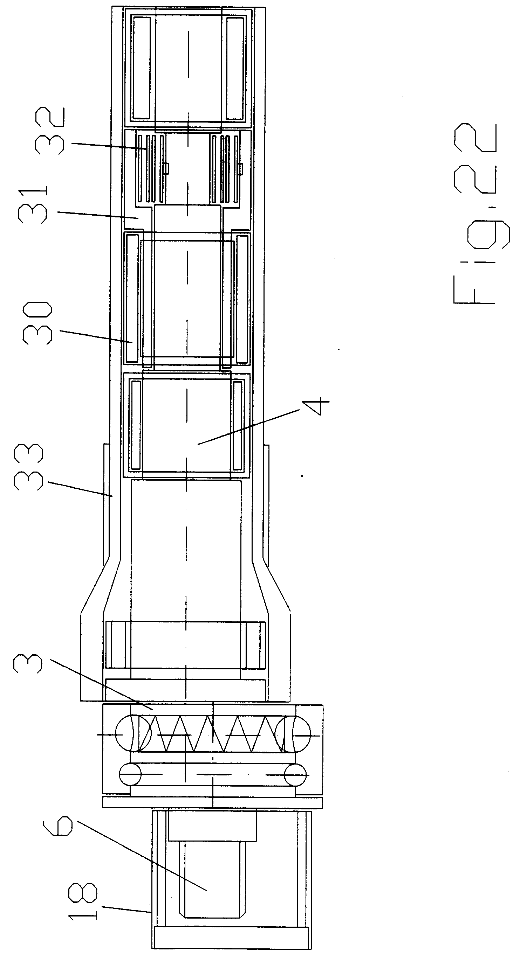

In den Fig. 20 und 21 ist eine Einschraubhülse 25 dargestellt, in welcher sich die eigentliche Freilaufeinrichtung befindet.

Die Einschraubhülse 25 wird in die Pedale eingeschraubt und ist daher den verschiedenen Pedaltypen bezüglich der Abmessungen und Einbaulänge angepaßt.

Die Einschraubhülse 25 weist in ihrem vorderen Teil 26 eine Aussparung 27 zur Einführung einer auf der Freilaufhülse 28 befindlichen Nase eines Nasenringes auf. Hinter dieser Aussparung besitzt die Einschraubhülse 25 eine Nut 29 zur Aufnahme der Nase des Nasenringes.

In der Nut 29 liegt zusätzlich eine in den Figuren nicht dargestellte Feder, welche einerseits an der Nase und andererseits an der Einschraubhülse 25 befestigt ist. Die Befestigung der Feder erfolgt zweckmäßigerweise über einen Anschlag in der Nut 29, beispielsweise eine in die Nut einschraubbare Madenschraube.

Die Umschaltung zwischen den Schaltstellungen, also das Drehen des Exzenterelementes 3, wird durch Rückwärtstreten der Pedalen erreicht. Hierbei läuft sich die Freilaufhülse 28 auf dem Pedalachsteil 4 fest. Dadurch dreht sich die Nase in der Nut 29, spannt die Feder und läuft gegen den Anschlag. Bei nunmehr weiteren Rückwärtstreten wird hierdurch jetzt das Pedal festgehalten und das Exzenterelement 3 gedreht.

Eine weitere Möglichkeit zur Einstellung der Strecke des Rückwärtstretens bis zur Aktivierung des Verstellmechanismus ist in Fig. 22 dargestellt und besteht darin, daß die Freilaufhülse 30 auf einer Buchse 31 gelagert wird. Diese Buchse 31 erfüllt die Wirkung eines Gleitlagers auf dem Pedalachsteil 4. An dieser Buchse 31 wird eine Feder 32 befestigt, die im den Pedalachsteil 4 gewickelt und dort ein zweites Mal befestigt wird.
Beim Vorwärtstreten dreht sich die Freilaufhülse 30, die in einer Passung in der Einschraubhülse 33 sitzt, auf der Buchse 31.
Beim Rückwärtstreten blockiert die Freilaufhülse 30 die Buchse 31, die daran befestigte Feder 32, welche im vorliegenden Ausführungsbeispiel als Blattfeder ausgebildet ist, spannt sich auf bis sie auf dem Pedalachsteil 4 blockiert und den Schaltvorgang des Exzenterelementes auslöst.

Es ist selbstverständlich, daß die Merkmale der hier beschriebenen Ausführungsform der Freilaufeinrichtung unter Berücksichtigung der konstruktiven Gegebenheiten ausgetauscht bzw. miteinander kombiniert werden können.

Die vorliegende Erfindung ist nicht auf die hier dargestellten Ausführungsbeispiele beschränkt. Vielmehr ist es möglich, durch Variation der einzelnen Elemente und Merkmale weitere Ausführungsformen zu realisieren, ohne den Rahmen der Erfindung gemäß Anspruch 1 zu verlassen.

## Patentansprüche

1. Vorrichtung zur Tretkurbelarmlängenverstellung an Tretkurbeln für Fahrräder mit einem zwischen Tretkurbelarm und Pedale wirkendem Exzenter und einer auf der Pedalachse angeordneten Freilaufeinrichtung
**dadurch gekennzeichnet,**
daß zwischen handelsüblichem Tretkurbelarm und handelsüblicher Pedale mit entfernter Pedalachse anstelle der herkömmlichen Pedalachse ein seperates Stellglied (1) angeordnet ist, welches aus einem Exzenterelement (3) mit Pedalachsteil (4) für die Aufnahme und Lager einer Pedale und einem mit dem Exzenterelement (3) koresspondierenden Gegenstück (5) mit Einschraubgewindeteil (6) zum Befestigen an einer handelsüblichen Gewindebohrung des Tretkurbelarms besteht, wobei das Gegenstück (5) und das Exzenterelement (3) jeweils die Tretkraft übertragende Mitnahmeelemente (7) oder Mitnahmevertiefungen (8) aufweisen und im montierten Zustand die die Tretkraft übertragenden Mitnahmeelemente (7) mit zugeordneten Mitnahmevertiefungen (8) in Eingriff stehen und die wirksame Länge des Tretkurbelarms definieren und die Zuordnung der Mitnahmevertiefungen (8) zu den die Tretkraft übertragenden Mitnahmeelementen (7) und damit die symetrische Einstellung der wirksamen Länge der Tretkurbelarme durch Rückwärtsdrehung der Tretkurbelarme im Zusammenwirken mit der auf dem Pedalachsteil (4) angeordneten Freilaufeinrichtung erfolgt.

2. Vorrichtung nach Anspruch 1,
**dadurch gekennzeichnet,**
daß das Gegenstück (5) an seiner Stirninnenseite (10) mindestens zwei Mitnahmeelemente (7) und das Exzenterelement (3) an seiner Stirnseite (11) mindestens vier auf einer Lauffläche(9) angeordnete Mitnahmevertiefungen (8) aufweist.

3. Vorrichtung nach Anspruch 1
**dadurch gekennzeichnet,**
daß das Gegenstück (5) an seiner Stirninnenseite (10) mindestens vier Mitnahmevertiefungen und das Exzenterelement (3) an seiner Stirnseite (11) mindestens zwei Mitnahmeelemente aufweist.

4. Vorrichtung nach Anspruch 1,
**dadurch gekennzeichnet,**
daß die Mitnahmeelemente (7) an der Außenseite (10b) des Gegenstücks (5) und die Mitnahmevertiefungen (8) an der Innenseite (11b) des Exzenterelements (3) angeordnet sind.

5. Vorrichtung nach Anspruch 1,
**dadurch gekennzeichnet,**
daß die Mitnahmevertiefungen (8) an der Außenseite (10b) des Gegenstücks (3) und die Mitnahmeelemente (7) an der Innenseite (11b) des Exzenterelements (3) angeordnet sind.

6. Vorrichtung nach Anspruch 1,
**dadurch gekennzeichnet,**
daß das Einschraubgewindeteil (6) bezüglich der Achse der Gewindebohrung des Tretkurbelarms zentrisch und das Pedalachsteil (4) bezüglich der Achse der Gewindebohrung des Tretkurbelarms exzentrisch angeordnet ist

7. Vorrichtung nach einem der Ansprüche 1 bis 6,
**dadurch gekennzeichnet,**
daß die Mitnahmeelemente (7) Kugeln und die Mitnahmevertiefungen (8) halbkugelförmige Ausnehmungen oder Bohrungen sind.

8. Vorrichtung nach Anspruch 7,
**dadurch gekennzeichnet,**
daß die Kugeln (7) mit in Bohrungen (13) angeordneten Federn (14) beaufschlagt sind.

9. Vorrichtung nach Anspruch 6,
**dadurch gekennzeichnet,**
daß mehrere Kugeln (7) von einer zentral angeordneten Feder beaufschlagt werden.

10. Vorrichtung nach Anspruch 8 oder 9,
**dadurch gekennzeichnet,**
daß die auf die Kugeln (7) wirkende Federkraft über Einstellelemente (15) einstellbar ist.

11. Vorrichtung nach Anspruch 1,
**dadurch gekennzeichnet,**
daß die Freilaufeinrichtung aus einer ersten Buchse (16) mit einer Aussparung (17) und einer in der ersten Buchse (16) angeordneten zweiten Buchse (18) mit einer Nase (19) besteht, wobei die Freilaufeinrichtung beim Vorwärtstreten Freilaufstellung einnimmt und beim Rückwärtstreten das Pedalachsteil (4) fest mit der Pedale verbindet und das Exzenterelement (3) seine Position gegenüber dem Gegenstück (5) verändert und die Mitnahmeelemente (7) sich entlang der Lauffläche (9) bewegen und in die nächsten Mitnahmevertiefungen (8) eingreifen.

12. Vorrichtung nach Anspruch 1,
**dadurch gekennzeichnet,**
daß in die Gewindebohrung zur Aufnahme der Pedalachse des handelsüblichen Tretkurbelarmes eine Hülse (16) mit einer zentrischen Gewindebohrung (17) zur Aufnahme des Einschraubgewindeteiles (6) eingeschraubt ist.

13. Vorrichtung nach Anspruch 1,
**dadurch gekennzeichnet,**
daß in die Gewindebohrung zur Aufnahme der Pedalachse des handelsüblichen Tretkurbelarmes eine Hülse (18) mit einem Langloch (19) zur Aufnahme des Einschraubgewindeteiles (6) eingeschraubt ist.

14. Vorrichtung nach Anspruch 13,
**dadurch gekennzeichnet,**
daß die Positionierung des Einschraubgewindeteiles (6) im Langloch (19) mittels einer Gewindehülse mit Innensechskant erfolgt.

15. Vorrichtung nach Anspruch 1,
**dadurch gekennzeichnet,**
daß das Pedalachsteil (4) massiv ausgebildet und an dem Exzenterelement (3) fest angeformt ist.

16. Vorrichtung nach Anspruch 1, dadurch gekennzeichnet, daß das Pedalachsteil (4) aus einer Hohlachse (20) und darin angeordnetem Bolzen (21) besteht und an der Stirnfläche (22) des Exzenterelementes (3) ein Langloch (23) zur Aufnahme der Hohlachse (20) und des Bolzens (21) angeordnet ist.

17. Vorrichtung nach Anspruch 16,
**dadurch gekennzeichnet,**
daß das Langloch (23) an der äußeren Stirnfläche des Exzenterelementes (3) passend zur Hohlachse (20) und an der inneren Stirnfläche passend zum Bolzen (21) gearbeitet ist.

18. Vorrichtung nach Anspruch 16 oder 17,
**dadurch gekennzeichnet,**
daß der Bolzen (21) länger ist als die Hohlachse (20) und an seinem hinteren Ende ein Gewinde (24) zur Aufnahme mindestens einer Mutter aufweist.

19. Vorrichtung nach Anspruch 1,
**dadurch gekennzeichnet,**
daß die Freilaufeinrichtung aus einer Einschraubhülse (25) mit Nut (29) und Aussparung (27) und auf dem Pedalachsteil (4) angeordneter Freilaufhülse (28) mit Nasenring und daran angeformter Nase besteht.

20. Vorrichtung nach Anspruch 19,
**dadurch gekennzeichnet,**
daß in der Nut (29) eine Feder und ein Anschlag angeordnet ist.

21. Vorrichtung nach Anspruch 1,
**dadurch gekennzeichnet,**
daß eine Freilaufhülse (30) auf einer Buchse (31), welche als Gleitlager auf dem Pedalachsteil (4) wirkt, gelagert ist und an dieser Buchse eine Feder (32) befestigt ist, welche um den Pedalachsteil (4) gewickelt und dort mit ihrem anderen Ende befestigt ist.

22. Vorrichtung nach Anspruch 21,
**dadurch gekennzeichnet,**
daß die Feder (32) eine Blattfeder ist.

## Claims

1. Device for adjusting the length of a pedal crank arm on pedal cranks for bicycles, comprising an eccentric acting between the pedal crank arm and the pedal as well as a free-wheeling gear,
**characterised in** that,
instead of the customary pedal shaft, a separate setting element (1) is located between the commercial pedal crank arm and the commercial pedal, which setting element is comprised of an eccentric element (3) having a pedal shaft component (4) accommodating the mount and bearings of a pedal, and of a counterpart (5) matched with said eccentric element (3) and having a threaded male component (6) to be screwed into a customary tapped hole in the pedal crank arm, the counterpart (5) and the eccentric element (3) each having dog elements (7) or driving depressions (8) for foot-force transmission, and said foot-force transmitting dog elements (7), in the assembled condition, engaging associated driving depressions (8) thereby defining the effective length of the pedal crank arm, the driving depressions (8) being assigned to the foot-force transmitting dog elements (7) and, thus, symmetrical adjustment of the effective length of the pedal crank arms being effected through rotation of the said pedal crank arms in the backward direction, the same acting together with the free-wheeling gear mounted on the pedal shaft component (4).

2. Device in accordance with claim 1,
**characterised in** that
the counterpart (5), on its inner front side (10), has at least two dog elements (7), and the eccentric element (3), on its front side (11), has at least four driving depressions (8) located on the running surface (9).

3. Device in accordance with claim 1,
**characterised in** that
the counterpart (5), on its inner front side (10), has at least four driving depressions, and the eccentric element (3), on its front side (11), has at least two dog elements.

4. Device in accordance with claim 1,
**characterised in** that
the dog elements (7) are located on the outside (10b) of counterpart (5) and the driving depressions (8) are located on the inner side (11b) of the eccentric element (3).

5. Device in accordance with claim 1,
**characterised in** that
the driving depressions (8) are located on the out-side (10b) of counterpart (5) and the dog elements (7) are located on the inner side (11b) of the eccentric element (3).

6. Device in accordance with Claim 1,
**characterised in** that
the threaded male component (6) is located centrically in relation to the axis of the tapped hole in the pedal crank arm and the pedal shaft component (4) is arranged eccentrically in relation to said tapped hole in the pedal crank arm.

7. Device in accordance with one of Claims 1 to 6,
**characterised in** that
the dog elements (7) are balls and the driving depressions (8) are hemispherical recesses or holes.

8. Device in accordance with Claim 7,
**characterised in** that
the balls (7) are loaded by springs (14) mounted in holes (13).

9. Device in accordance with Claim 6,
**characterised in** that
several balls (7) are loaded by one centrally arranged spring.

10. Device in accordance with Claims 8 or 9,
**characterised in** that
the spring force acting on the balls (7) can be set by means of setting elements (15).

11. Device in accordance with Claim 1,
**characterised in** that
the free-wheeling gear comprises a first bushing (16) having a recess (17) and a second bushing (18) mounted in said bushing (16) and having a nose (19), the free-wheeling gear, when pedalling in the forward direction, assuming a free-wheeling position and, when pedalling in the backward direction, firmly connecting the pedal shaft component (4) with the pedal, the eccentric element (3) changing its position in relation to the counterpart (5), and the dog elements (7) moving along the running surface (9) and engaging the next driving depressions (8).

12. Device in accordance with Claim 1,
**characterised in** that
a bushing (16) having a centric tapped hole (17) for receiving the threaded male component (6) is screwed into the tapped hole provided in the commercial pedal crank arm and designed to accommodate the pedal shaft.

13. Device in accordance with Claim 1,
**characterised in** that
a bushing (18) having an elongated hole (19) for receiving the threaded male component (6) is screwed into the tapped hole provided in the commercial pedal crank arm and designed to accommodate the pedal shaft.

14. Device in accordance with Claim 1,
**characterised in** that
the threaded male component (6) is positioned in the elongated hole (19) by means of a threaded sleeve with hexagon socket.

15. Device in accordance with Claim 1,
**characterised in** that
the pedal shaft component (4) is of solid construction and is formed as an integral part of the eccentric element (3).

16. Device in accordance with Claim 1,
**characterised in** that
the pedal shaft component (4) is comprised of a hollow shaft (20) and a bolt (21) mounted therein, and that on the front surface (22) of the eccentric element (3) an elongated hole (23) is provided for accommodating the hollow shaft (20) and the bolt (21).

17. Device in accordance with Claim 16,
**characterised in** that,
on the outside front surface of the eccentric element (3), the elongated hole (23) is machined so as to match the hollow shaft (20) and on the inner front surface so as to match the bolt (21).

18. Device in accordance with claim 16 or 17,
**characterised in** that
the bolt (21) is longer than the hollow shaft (20) and has a thread (24) on its extremity for receiving at least one nut.

19. Device in accordance with Claim 1,
**characterised in** that
the free-wheeling gear is comprised of a sleeve (25) with male thread, groove (29) and recess (27), and of a free-wheeling sleeve (28) mounted on the pedal shaft component (4) and having a catch ring with a nose formed as an integral part thereof.

20. Device in accordance with Claim 19,
**characterised in** that a
spring and a stop are placed in the groove (29).

21. Device in accordance with claim 1,
**characterised in** that
a free-wheeling sleeve (30) is supported on a bushing (31) acting on the pedal shaft component (4) as a sliding bearing, and a spring (32) is fixed to said bushing, said spring being wound around the pedal shaft component (4) and fixed there with its free end.

22. Device in accordance with Claim 21,
**characterised in** that
the spring (32) is a leaf spring.

## Revendications

1. Mécanisme pour ajuster la longueur des manivelles à pédaler sur les pédaliers de bicyclettes avec un excentrique agissant entre la manivelle et la pédale et un systéme à roue libre disposé sur l'axe de pédale
**caractérisé en ce**
qu'entre la manivelle d'un type commercial et la pédale commerciale est disposé, au lieu de l'axe de pédale usuel, un dispositif de réglage séparé (1) qui est composé d'un élément excentrique (3) avec un élément d'axe de pédale (4), pour le logement et les paliers d'une pédale, et d'un contre-élément (5) à partie filetée mâle (6) correspondant à l'élément excentrique (3) et destiné à être attaché à un trou taraudé dans la manivelle de type commercial, où le contre-élément (5) et l'élément excentrique (3) comportent des éléments d'entraînement (7) ou des cavités d'entraînement (8), respectivement, destinés à transmettre la force de pied, et où les éléments d'entraînement (7) destinés à transmettre la force de pied sont en prise, dans leur état monté, avec des cavités d'entraînement (8) correspondantes et définissent la longueur effective de la manivelle, et où l'attribution des cavités d'entraînement (8) aux éléments d'entraînement (7) transmettant la force de pied et, de cette manière, le réglage symmétrique de la longueur effective des manivelles, se fait par l'intermédiaire d'une rotation rétrograde des manivelles en combinaison avec le système à roue libre disposé sur l'élément d'axe de pédale (4).

2. Mécanisme suivant la revendication 1
**caractérisé en ce**
que le contre-élément (5) comporte au moins deux éléments d'entraînement (7) disposés sur sa face frontale intérieure (10) et l'élément excentrique (3) comporte au moins quatre cavités d'entraînement (8) disposées sur une surface de roulement (9) de sa face frontale (11).

3. Mécanisme suivant la revendication 1
**caractérisé en ce**
que le contre-élément (5) comporte au moins quatre cavités d'entraînement disposées sur sa face frontale intérieure (10) et l'élément excentrique (3) comporte au moins deux éléments d'entraînement sur sa face frontale (11).

4. Mécanisme suivant la revendication 1
**caractérisé en ce**
que les éléments d'entraînement (7) sont disposés sur la face extérieure (10b) du contre-élément (5) et les cavités d'entraînement (8) sont disposées sur la face intérieure (11b) de l'élément excentrique (3).

5. Mécanisme suivant la revendication 1
**caractérisé en ce**
que les cavités d'entraînement (8) sont disposées sur la face éxtérieure (10b) du contre-élément (3) et les éléments d'entraînement (7) sont disposés sur la face intérieure (11b) de l'élément excentrique (3).

6. Mécanisme suivant la revendication 1
**caractérisé en ce**
que la partie filetée mâle (6) est disposée d'une manière centrée relativement à l'axe du trou taraudé dans la manivelle et que l'élément d'axe de pédale (4) est disposé d'une manière excentrique relativement à l'axe du trou taraudé dans la manivelle.

7. Mécanisme suivant une des revendications 1 à 6
**caractérisé en ce**
que les éléments d'entraînements (7) sont représentés par des billes et les cavités d'entraînement (8) sont représentées par des creux ou alésages hémisphériques.

8. Mécanisme suivant la revendication 7
**caractérisé en ce**
que les billes (7) sont chargées par ressorts (14) disposés dans alésages (13).

9. Mécanisme suivant la revendication 6
**caractérisé en ce**
que plusieurs billes (7) sont chargées par un seul ressort disposé dans un endroit central.

10. Mécanisme suivant la revendication 8 ou 9
**caractérisé en ce**
que la tension du ressort agissant sur les billes (7) peut être réglée au moyen d'éléments de réglage (15).

11. Mécanisme suivant la revendication 1
**caractérisé en ce**
que le système à roue libre comporte une première douille (16) à encoche (17) et une deuxième douille (18) à tenon (19) disposée dans la première douille (16), le système à roue libre prennant sa position à roue libre en cas de pédalage en avant et établit une connexion solide entre l'élément d'axe de pédale (4) et la pédale elle-même en rétropédalage, l'elément excentrique (3) changeant sa position relativement au contre-élément (5) et les éléments d'entraînement (7) mouvant le long de la surface de roulement (9) et s'accrochant dans les cavités d'entraînement (8) les plus proches.

12. Mécanisme suivant la revendication 1
**caractérisé en ce**
qu'une douille (16) à trou taraudé centré, destiné à recevoir l'élément fileté mâle (6), est vissée dans le trou taraudé destiné à recevoir l'axe de pédale d'une manivelle commerciale.

13. Mécanisme suivant la revendication 1
**caractérisé en ce**
qu'une douille (18) à trou oblong (19), destiné à recevoir l'élément fileté mâle (6), est vissée dans le trou taraudé destiné à recevoir l'axe de pédale d'une manivelle commerciale.

14. Mécanisme suivant la revendication 13
**caractérisé en ce**
que le positionnement de l'élément fileté mâle (6) dans le trou oblong (19) se fait au moyen d'une douille filetée à six pans creux.

15. Mécanisme suivant la revendication 1
**caractérisé en ce**
que l'élément d'axe de pédale (4) est d'une construction massive et forme une partie intégrale de l'élément excentrique (3)

16. Mécanisme suivant la revendication 1
**caractérisé en ce**
que l'élément d'axe de pédale (4) est composé d'un essieu creux (20) et un boulon (21) disposé dans cet essieu, et en ce qu'un trou oblong (23) destiné à recevoir l'essieu creux (20) et le boulon (21) est pratiqué sur la face frontale (22) de l'élément excentrique (3).

17. Mécanisme suivant la revendication 16
**caractérisé en ce**
que le trou oblong (23) est usiné, sur la face frontale extérieure de l'élément excentrique (3), d'une forme adaptée à l'essieu creux (20) et sur la face frontale intérieure d'une forme adaptée au boulon (21).

18. Mécanisme suivant la revendication 16 ou 17
**caractérisé en ce**
que le boulon (21) est plus long que l'essieu creux (20) et comporte à son extrémité un filetage (24) destiné à recevoir au moins un écrou.

19. Mécanisme suivant la revendication 1
**caractérisé en ce**
que le système à roue libre est composé d'une douille à filetage mâle (25) avec rainure (29) et évidement (27) et d'une boîte à roue libre (28) avec bague d'entraînement à tenon formant une partie intégrale de celle-ci.

20. Mécanisme suivant la revendication 19
**caractérisé en ce**
qu'un ressort et une butée sont disposés dans la rainure (29).

21. Mécanisme suivant la revendication 1
**caractérisé en ce**
qu'une boîte à roue libre (30) est logée sur une douille (31), servant comme palier à glissement sur l'élément d'axe de pédale (4), et qu'un ressort (32) est fixé à cette douille, le dit ressort étant enroulé autour de l'élément d'axe de pédale (4) et y fixé avec son autre extremité.

22. Mécanisme suivant la revendication 21
**caractérisé en ce**
que le ressort (32) est un ressort à lâme.
